# FASCICULE DE BREVET EUROPEEN

(11) **EP 3 949 317 B1**
(45) Date de publication et mention de la délivrance du brevet: **21.08.2024**
(21) Numéro de dépôt: 20713056.8
(22) Date de dépôt: 27.03.2020
(51) Int. Cl.: H04L 65/403, H04L 65/80, H04L 65/75, G06T 7/00

(54) **PROCÉDÉ DE MODIFICATION D'UN CONTENU MULTIMEDIA**
VERFAHREN ZUR MODIFIZIERUNG VON MULTIMEDIA-INHALTEN
METHOD FOR MODIFYING MULTIMEDIA CONTENT

(30) Priorité: 29.03.2019 FR 1903398
(43) Date de publication de la demande: 09.02.2022
(73) Titulaire: Orange, 92130 Issy-les-Moulineaux (FR)
(72) Inventeur: CARTIGNY, Jean, 92326 Chatillon (FR); FLOURY, Cédric, 92326 Chatillon (FR)
(86) Numéro de dépôt international: PCT/EP2020/058837
(87) Numéro de publication internationale: WO 2020/201148

(56) Documents cités:
- US-A1- 2015 145 944
- US-A1- 2016 308 929

## Description

### 1. Domaine de l'invention

L'invention concerne le domaine des contenus numériques et plus particulièrement un procédé permettant la modification d'une partie d'un contenu affiché par un dispositif apte à restituer ledit contenu tel qu'un terminal mobile ou une télévision.

### 2. Art Antérieur

De nos jours, une grande partie des réunions professionnelles se font à distance. Cela permet par exemple à une entreprise de réduire son empreinte carbone en limitant les déplacements de ses collaborateurs. Grâce à l'essor des réseaux de télécommunication, ces réunions ont considérablement évolué, passant de la simple réunion téléphonique à des réunions de type visioconférence permettant de voir et de dialoguer avec son ou ses interlocuteurs. Pour réaliser ces visioconférences, des salles dédiées avec caméras, écrans et connectivité internet, sont le plus souvent aménagées dans les locaux des entreprises. Elles sont cependant limitées en nombre car très onéreuses à réaliser. Ainsi il n'est pas rare que certains collaborateurs utilisent un terminal comme par exemple un smartphone, une tablette ou un ordinateur pour participer à ces visioconférences. Ces personnes sont alors le plus souvent localisées au sein d'un espace de travail commun tel qu'un bureau partagé.

Lors de ces visioconférences les participants ont la possibilité de partager des contenus multimédia (présentations, vidéos, etc.). Pour les participants situés, par exemple, à distance, la qualité de restitution de ces contenus au niveau de l'écran de leur terminal dépend alors de plusieurs facteurs tels que de la qualité de la capture vidéo, elle-même liée aux capacités du matériel de captation vidéo présent dans la salle de visioconférence, de la qualité d'encodage du flux vidéo, des capacités (puissance processeur / mémoire / codeur décodeur vidéo disponibles, etc.) de leur terminal ou encore de la qualité du réseau de communication utilisé pour faire transiter l'information. Lorsqu'une présentation au format texte est partagée, ces mêmes participants auront du mal à lire le contenu sur leur terminal si les conditions évoquées précédemment ne sont pas toutes réunies. Ils seront alors privés du support de la discussion. Ce problème est également vrai pour les participants situés dans la salle si celle-ci est suffisamment grande comme par exemple une salle de conférence ou un amphithéâtre. Les participants éloignés de l'écran ou ayant des difficultés de vision vont naturellement vouloir utiliser leur terminal mobile pour visualiser le contenu partagé et seront confrontés aux mêmes limitations. Tout cela peut poser des problèmes de compréhension et en corollaire d'efficacité de la réunion.

A l'inverse, si toutes les conditions permettant une diffusion des contenus avec une grande qualité sont réunies, il est possible pour les personnes qui partagent le flux vidéo capté par la caméra de leur terminal mobile, de dévoiler sans le savoir ou sans le vouloir des données sensibles affichées, par exemple, sur un écran situé dans le champ de captation de la caméra du terminal mobile.

US 2015/0145944 décrit un procédé dans lequel un UE participe à une session de communication qui partage un flux vidéo avec des UE cibles. L'UE reçoit une entrée utilisateur qui identifie des parties hautement prioritaires du flux vidéo. L'UE génère un premier flux vidéo sur la base des parties hautement prioritaires et un second flux vidéo sur la base d'au moins d'autres parties du flux vidéo. Les premier et second flux vidéo sont échangés avec les UE cibles sur des première et seconde liaisons, respectivement. Dans un exemple, la première liaison qui transporte le premier flux vidéo peut se voir attribuer une QoS. Les UE cibles combinent les premier et second flux vidéo pour reconstruire une version du flux vidéo, puis présentent la version reconstruite du flux vidéo.

US 2016/0308929 décrit un procédé dans lequel un ordinateur reçoit un premier signal audio acquis par un premier dispositif utilisateur utilisé par un premier utilisateur dans une conférence et un second signal audio acquis par un second dispositif utilisateur utilisé par un second utilisateur dans la conférence. L'ordinateur traite le premier signal audio sur la base du second signal audio pour améliorer la qualité du premier signal audio, et envoie le premier signal audio traité à la conférence.

### 3. Exposé de l'invention

Aucune solution n'est actuellement proposée par les outils de visioconférence pour enrichir le flux vidéo avec un contenu ayant une meilleure qualité et/ou masquer les contenus qui peuvent poser des problèmes de confidentialité.

L'invention concerne un procédé selon la revendication 1.

Avantageusement, selon l'invention, un tel procédé permet à un utilisateur utilisant par exemple la caméra de son terminal mobile pour réaliser une visioconférence de se prémunir d'une divulgation d'informations confidentielles. En effet, si un indicateur de qualité associé à une partie du contenu multimédia indique qu'il est, par exemple, possible de lire clairement un texte non présent dans un contenu de référence, tel qu'une présentation partagée, le procédé masquera alors le texte. Le masquage peut être réalisé en substituant la partie identifiée par un contenu neutre tel qu'un contenu multimédia prédéfini comme par exemple l'identité audiovisuelle de l'entreprise. L'utilisateur maîtrise ainsi les informations retransmises par la caméra et a la certitude que tous les éléments captés dans un environnement non adapté à une visioconférence seront traités et censurés si cela est nécessaire.

Dans le cas contraire, si l'utilisateur souhaite s'assurer qu'une présentation partagée lors d'une visioconférence sera bien lisible, le procédé va vérifier grâce à un indicateur de qualité déterminé au niveau de la partie identifiée du contenu multimédia correspondant à la zone d'affichage de la présentation partagée que ce sera bien le cas. Si l'indicateur de qualité révèle que la partie du contenu identifiée n'a pas le niveau de qualité requis, le procédé va alors avantageusement la modifier en remplaçant son contenu par le contenu de référence correspondant. Le contenu de référence ayant, par exemple, la qualité suffisante pour que l'indicateur de qualité indique que le nouveau contenu présent dans la partie identifiée sera lisible.

Par « contenu de référence », on entend ici l'ensemble des documents et supports audiovisuels partagés lors de la visioconférence (vidéo, audio, texte, images, etc.) mais aussi tout type de contenu permettant d'évaluer par comparaison la qualité du contenu multimédia comme par exemple une base de données d'images / de sons, un alphabet ou encore un dictionnaire. Par terminal, on entend ici tout dispositif apte à capter un contenu multimédia et à se connecter à un réseau de communication tel qu'une caméra connectée, un ordinateur ou encore un smartphone. A noter que la captation réalisée par le ou les premiers terminaux peut, en plus de la diffusion du contenu multimédia capté, faire intervenir une étape d'enregistrement préalable à la diffusion, sans sortir pour autant du cadre de l'invention. On notera également que le réseau de communication peut se limiter, sans sortir du contexte de l'invention, à une connexion point à point comme par exemple une connexion utilisant la technologie WiFi direct.

Selon un mode de mise en oeuvre particulier de l'invention, un procédé tel que décrit ci-dessus est caractérisé en ce que l'étape de modification est suivie d'une étape de transmission, vers au moins un second terminal, du contenu multimédia modifié. Ce mode de mise en oeuvre de l'invention permet par exemple de diffuser le contenu modifié aux terminaux connectés à la visioconférence et situés à distance.

Selon un mode de mise en oeuvre particulier de l'invention, un procédé tel que décrit ci-dessus est caractérisé en ce que ladite partie du contenu multimédia contient une image ou une séquence d'images.

Avantageusement, l'évaluation de la qualité des contenus tels que des images ou des séquences d'images est connu de l'homme du métier. Le procédé va alors identifier, par exemple grâce à une IA (Intelligence Artificielle) entrainée pour repérer des éléments particuliers dans une image ou une séquence d'images, une partie du contenu multimédia et déterminer un indicateur de qualité associé. En fonction de l'indicateur, le procédé va alors avantageusement modifier la partie identifiée avec un contenu ayant la qualité requise.

Selon une variante de ce mode particulier de réalisation de l'invention, un procédé tel que décrit ci-dessus est caractérisé en ce que la modification de ladite au moins une partie est un enrichissement par une image ou une séquence d'images ayant ledit au moins un indicateur de qualité supérieur à celui déterminé pour ladite au moins une partie. De cette façon il est alors possible pour un utilisateur de visualiser le contenu avec une qualité d'image accrue. Il existe de nombreux procédés pour évaluer la qualité d'une image, avec ou sans référence.

Selon une variante de ce mode particulier de réalisation de l'invention, un procédé tel que décrit ci-dessus est caractérisé en ce que la modification de ladite au moins une partie est un enrichissement par une image ou une séquence d'images ayant ledit au moins un indicateur de qualité inférieur à celui déterminé pour ladite au moins une partie. De cette façon les éléments confidentiels présents dans le contenu multimédia capté par un terminal présent dans la salle de visioconférence peuvent être dégradés de manière à les rendre inintelligibles, voire complètement masqués.

Selon un mode de mise en oeuvre particulier de l'invention, un procédé tel que décrit ci-dessus est caractérisé en ce que ladite partie du contenu multimédia contient une séquence audio préalablement enregistrée. Lors de la visioconférence les utilisateurs peuvent souhaiter diffuser une séquence audio préenregistrée. Le procédé va alors identifier, par exemple grâce à la piste audio, la partie du contenu associée à la séquence audio et déterminer un indicateur de qualité. En fonction de l'indicateur, le procédé va alors avantageusement modifier la partie identifiée avec un contenu audio ayant la qualité requise.

Selon un mode de mise en oeuvre particulier de l'invention, un procédé tel que décrit ci-dessus est caractérisé en ce que ledit au moins un indicateur de qualité du contenu de ladite au moins une partie est obtenu à l'issue des étapes suivantes :
- obtention d'un contenu de référence,
- comparaison entre ledit contenu de référence et le contenu de ladite au moins une partie dudit contenu multimédia capté par ledit au moins un premier terminal.

Ce mode de réalisation permet de s'assurer d'une qualité de résultat accrue du procédé avec la certitude que le contenu de la partie sélectionnée et traitée par le procédé, sera très proche du contenu de référence. La comparaison sera alors plus rapide et permettra d'avoir un indicateur de qualité plus fiable. En effet dans le cas d'un contenu multimédia de type texte, il ne sera alors pas nécessaire au procédé de modification d'un contenu multimédia de connaitre l'alphabet ou le dictionnaire complet de la langue employée pour déterminer l'indicateur de qualité. Il lui suffira, par exemple, de comparer les lettres ou les mots présents dans le contenu de référence aux lettres ou mots présents dans la partie du contenu multimédia sélectionnée par le procédé.

Selon une variante de ce mode particulier de réalisation de l'invention, le procédé tel que décrit ci-dessus est caractérisé en ce que le contenu de référence est obtenu à partir d'une base de données. De cette façon, le contenu de référence utilisé par le procédé pour déterminer un indicateur de qualité d'une partie du contenu multimédia peut être modifié avant l'exécution du procédé. En effet, il est alors possible d'apporter des modifications au contenu de référence jusqu'à ce que le procédé soit exécuté, permettant d'obtenir un indicateur de qualité acceptable de manière à limiter les modifications à apporter au contenu multimédia.

Selon un mode de mise en oeuvre particulier de l'invention, un procédé tel que décrit ci-dessus est caractérisé en ce que ledit au moins un indicateur de qualité dépend des capacités matérielles ou logicielles dudit au moins un premier terminal. En effet, si les capacités matérielles ou logicielles des terminaux connectés à la visioconférence sont connues par le procédé et qu'elles indiquent que la qualité de captation vidéo du terminal utilisé ne sera pas suffisante pour restituer le contenu de référence avec la qualité requise, alors la modification de la partie sélectionnée pourra être réalisée de manière systématique.

Selon un mode de mise en oeuvre particulier de l'invention, un procédé tel que décrit ci-dessus est caractérisé en ce que ledit au moins un indicateur de qualité dépend de la qualité du réseau de communication utilisé. Cette qualité peut être par exemple liée à la bande passante disponible à un instant donné au niveau du réseau de communication. Une mesure régulière permettra de s'assurer que le réseau de communication n'intervient pas dans la dégradation du contenu multimédia diffusé par le terminal.

Selon un autre mode particulier de réalisation de l'invention, un procédé tel que décrit ci-dessus est caractérisé en ce que ledit au moins un indicateur de qualité du contenu de ladite au moins une partie est comparé à au moins une valeur de seuil prédéterminée du niveau de qualité. On entend ici par valeur de seuil une valeur de référence d'un indicateur de qualité à respecter pour une partie du contenu multimédia. Avantageusement ce mode de mise en oeuvre de l'invention permet de gérer la sensibilité du procédé de modification d'un contenu multimédia et de s'assurer que le procédé ne modifie pas une partie sélectionnée dès que le contenu capté est inférieur en qualité au contenu de référence. En effet le contenu légèrement dégradé présent dans partie sélectionnée peut avoir un niveau de qualité suffisant permettant une restitution sans modification de la part du procédé. Cela permet par exemple de limiter la consommation en temps processeur du procédé.

Selon une variante de ce mode particulier de réalisation de l'invention, le procédé tel que décrit ci-dessus est caractérisé en ce que ladite au moins une valeur de seuil est obtenue à partir d'une base de données. Ce mode de mise en oeuvre de l'invention permet de piloter la sensibilité du procédé. En effet, le procédé peut venir récupérer une valeur de seuil avant chaque exécution permettant ainsi de modifier la partie du contenu multimédia sélectionnée en fonction du contexte et du type de contenu.

L'invention concerne également un dispositif selon la revendication 10.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention concerne également un terminal ou un serveur comprenant un dispositif de modification tel que décrit ci-dessus.

L'invention concerne également un système selon la revendication 12.

L'invention concerne également un programme d'ordinateur selon la revendication 13. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif et ce système de modification d'un contenu multimédia ainsi que ce programme d'ordinateur présentent des caractéristiques et avantages analogues à ceux décrits précédemment en relation avec le procédé de modification d'un contenu multimédia.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre selon un mode particulier de réalisation de l'invention,
[Fig 2] La figure 2 illustre l'architecture d'un système mettant en oeuvre l'invention selon un mode particulier de réalisation,
[Fig 3] La figure 3 illustre des étapes du procédé de modification d'un contenu multimédia selon un mode particulier de réalisation de l'invention.

### 5. Description d'un mode de réalisation de l'invention

### 5.1 Principe général de l'invention

Le procédé de modification d'un contenu multimédia décrit ici permet, par exemple, aux participants à une visioconférence, de partager un contenu multimédia enrichi par le procédé s'assurant ainsi, en fonction du besoin, d'un niveau de confidentialité ou d'un niveau de qualité optimum contenus partagés.

### 5.2 Modes particuliers de réalisation de l'invention.

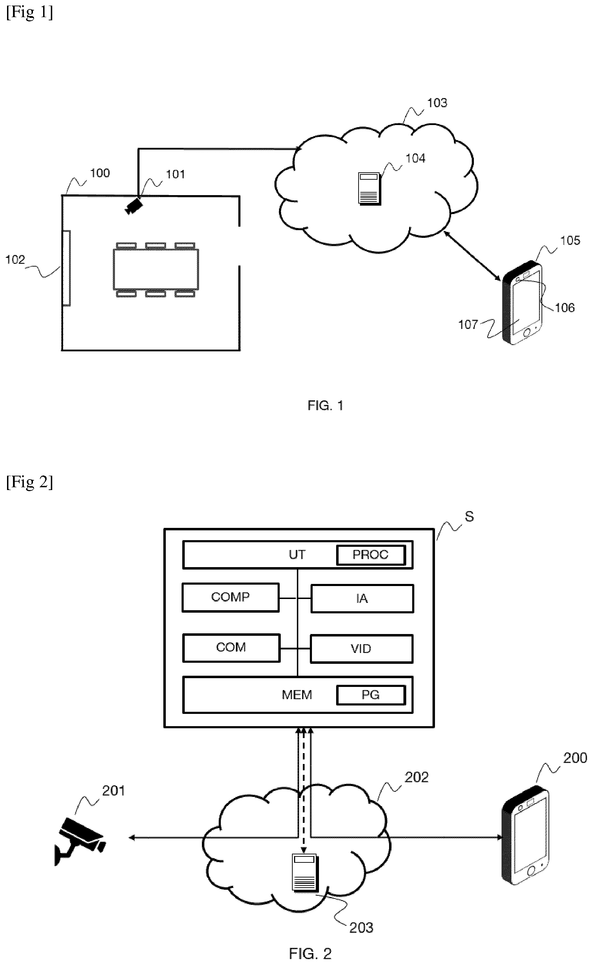

La figure 1 illustre un exemple d'environnement de mise en oeuvre de l'invention selon un mode particulier de réalisation. L'environnement de mise en oeuvre comprend au moins un premier terminal (101) et au moins un second terminal (105) adaptés pour établir des communications vidéo selon l'état de l'art grâce à un réseau de communications (103). Le terminal (101) est par exemple une caméra connectée ou tout autre terminal apte à capter une image ou une séquence d'images et à se connecter au réseau de communication (103), située par exemple dans une salle de visioconférence (100). L'environnement de mise en oeuvre comprend également un serveur (104) accessible depuis le réseau de communication (103) qui sera en charge d'exécuter le procédé de modification d'un contenu multimédia.

La qualité de l'image ou de la séquence d'images captée par un premier terminal (101) dépend entre autre de ses capacités d'acquisition vidéo telles que la résolution de sa caméra mais aussi de la qualité du réseau de communication (103). L'invention propose une solution visant à modifier, grâce au serveur (104) et lorsque les conditions le demandent, le contenu capté par un premier terminal (101) puis de le rediffuser à un second terminal (105) pour qu'il soit ensuite restitué sur son écran (107).

Selon un mode particulier de réalisation de l'invention, l'environnement de mise en oeuvre comprend également une caméra (106) située sur un second terminal (105) permettant la captation et la diffusion d'une image ou d'une séquence d'images vers le serveur (104). Le serveur rediffusera alors le contenu traité grâce au procédé de modification d'un contenu multimédia vers au moins un terminal apte à le restituer et situé dans la salle de visioconférence.

Selon un mode particulier de réalisation de l'invention, le terminal situé dans la salle de visioconférence peut être le premier terminal (101).

Selon un mode particulier de réalisation, le procédé de modification d'un contenu multimédia peut être exécuté sur un premier ou un second terminal.

Selon un mode particulier de réalisation, le procédé de modification d'un contenu multimédia peut être exécuté de façon répartie sur les premiers et seconds terminaux.

Les premiers et seconds terminaux peuvent être des caméras connectées, des smartphones, des tablettes, des ordinateurs portables ou tout autre dispositif adapté pour établir des communications vidéo, mais l'invention s'applique de la même manière à une communication audiovisuelle.

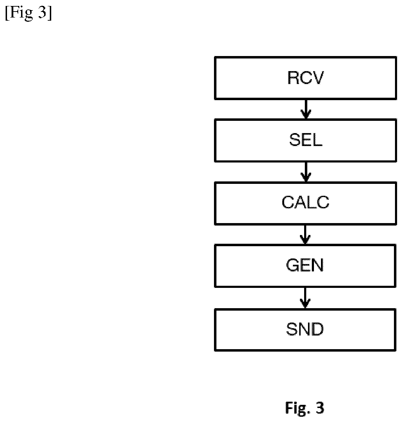

La figure 2 illustre un dispositif (S) configuré pour mettre en oeuvre le procédé de modification d'un contenu multimédia selon un mode particulier de réalisation de l'invention. Le dispositif (S) a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de modification d'un contenu multimédia tel que décrit ultérieurement à l'appui de la figure 3, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé de modification d'un contenu multimédia selon l'un quelconque des modes particuliers de réalisation décrits en relation avec la figure 3 et selon les instructions du programme d'ordinateur PG.

Le dispositif (S) comprend un module de communication COM configuré pour établir des communications avec un réseau par exemple IP selon une technologie de type Ethernet ou Wi-Fi. Ce module de communication est par exemple utilisé pour recevoir une image ou une séquence d'images captée par un premier terminal comme par exemple une caméra connectée (201) et diffuser lorsque cela est nécessaire une version modifiée de l'image ou de la séquence d'images à un second terminal (200). Ce même module peut également être sollicité pour télécharger auprès d'un serveur (203), des données utilisées par le procédé de modification d'un contenu multimédia, comme par exemple une valeur de seuil d'un indicateur de qualité associé à une partie du contenu multimédia capté par le premier terminal. Le module de communication COM peut aussi intervenir pour l'évaluation de la bande passante du réseau de communication (202) dans le but d'avoir un indicateur de qualité le plus précis possible. Les premiers et seconds terminaux vont par exemple venir télécharger des fichiers témoins (taille prédéfinie) hébergés au niveau de la mémoire (MEM) du dispositif (S). L'évaluation de la bande passante du réseau de communication pourra alors se faire sur la base des temps de téléchargement des fichiers.

Le dispositif (S) comprend, en plus de la mémoire (MEM) et l'unité de traitement (UT), un module d'indentification (IA) apte à analyser et sélectionner une partie du contenu multimédia capté par un premier terminal tel qu'un module d'intelligence artificielle entrainé à reconnaitre un certain type d'élément dans une image ou une séquence d'images comme par exemple l'image d'un tableau ou d'une télévision.

Le dispositif (S) comprend en outre un module de calcul (COMP) permettant de déterminer par comparaison avec un contenu de référence, comme par exemple un alphabet ou un dictionnaire dans le cas où la partie traitée est une zone de texte, l'indicateur de qualité de la partie sélectionnée.

Selon un mode particulier de réalisation le contenu de référence peut être un contenu stocké dans la mémoire (MEM) du dispositif.

Selon un autre mode particulier de réalisation le contenu de référence peut être un contenu accessible depuis une base de données située dans le réseau.

Le dispositif (S) comprend également un module de traitement vidéo (VID) apte à traiter et modifier un contenu multimédia. Ce module va par exemple modifier l'image ou la séquence d'images captée par un premier terminal pour l'enrichir avec le contenu de référence en haute résolution. Une fois modifiée, l'image ou la séquence d'images est ensuite restituée à un second terminal via l'interface COM du dispositif.

Selon un autre mode particulier de réalisation, la modification effectuée par le module VID peut être conditionnée au résultat de la comparaison entre une valeur de seuil et un indicateur de qualité déterminé par le module COMP de la partie sélectionnée.

La figure 3 illustre des étapes du procédé de modification d'un contenu multimédia selon un mode particulier de réalisation de l'invention. Le procédé s'exécutant sur le dispositif de modification d'un contenu multimédia situé par exemple sur un serveur dans le réseau ou sur une passerelle internet telle qu'un routeur ADSL ou fibre. Lors de la première étape (RCV) le procédé va établir une connexion avec un premier terminal présent dans la salle de visioconférence et réceptionner par exemple l'image ou la séquence d'images captée par le terminal. Le procédé de modification d'un contenu multimédia va également, selon cet exemple, obtenir les contenus en haute définition qui seront présentés. Optionnellement, il obtient en outre au moins une valeur de seuil d'au moins un indicateur de qualité à respecter. Cette étape va également permettre l'établissement d'une connexion à un second terminal, par exemple non présent dans la salle de visioconférence. En d'autres termes, le dispositif situé dans réseau au niveau d'un serveur va agir comme un relais entre les premiers et les seconds terminaux. Selon un mode particulier de réalisation de l'invention, la ou les valeurs de seuil peuvent être stockées dans la mémoire (MEM) du dispositif. Avantageusement, en cas de perte de connectivité avec le serveur distant hébergeant les valeurs de seuil, le procédé de modification d'un contenu multimédia pourra se poursuivre et mettre en jeu la deuxième étape.

A la deuxième étape (SEL), le procédé va sélectionner au moins une partie du contenu multimédia. Cette sélection peut se faire par exemple grâce à l'utilisation d'une intelligence artificielle entrainée à reconnaitre un élément précis dans une image ou une séquence d'images. Cela peut être des repères prédéfinis ou des objets tels que l'image d'un écran ou d'un tableau. La sélection peut également se faire via la recherche dans le contenu multimédia d'un des éléments présents dans le contenu de référence comme par exemple un QR Code, un logo ou tout autre élément caractéristique du contenu de référence.

A la troisième étape (CALC) le procédé va obtenir au moins un indicateur de qualité d'une partie sélectionnée lors de la phase (SEL). L'indicateur de qualité est déterminé par exemple par comparaison entre le contenu de la partie sélectionnée et le contenu de référence associé. Dans le cas d'un contenu de type texte, l'indicateur peut être déterminé en utilisant un algorithme de reconnaissance de caractères (OCR - Optical Character Recognition) dont le résultat est comparé à un alphabet ou à une liste prédéfinie de mots telle qu'un dictionnaire stocké par exemple dans la mémoire (MEM) du dispositif. Le nombre de correspondances permet d'établir un score et ainsi de définir un indicateur de qualité. Une IA, préalablement entrainée, peut également être utilisée pour effectuer la comparaison de contenus plus complexes comme par exemple des graphiques, des images ou des vidéos. L'indicateur de qualité étant par exemple déterminé suivant l'écart constaté au niveau des formes, de la pixellisation ou même des couleurs.

Selon un mode particulier de réalisation de l'invention, la partie sélectionnée lors de la phase (SEL) peut être comparée au contenu de référence préalablement téléchargé et stocké dans la mémoire (MEM) du dispositif lors de l'étape 1 (RCV).

A l'étape suivante (GEN) le procédé va générer, en fonction d'un indicateur de qualité, un contenu multimédia modifié au niveau de la partie sélectionnée lors de l'étape 2 (SEL).

Selon un mode particulier de réalisation de l'invention, la modification apportée à la partie sélectionnée peut être l'incrustation en haute définition du contenu de référence partagé et diffusé au niveau de l'écran de la salle de visioconférence. En effet, le procédé va rechercher dans le contenu de référence, le contenu qui correspond à celui de la partie sélectionnée. Cette recherche peut se faire par exemple grâce au numéro de la page de la présentation ou tout autre élément caractéristique du contenu affiché tel qu'une image, un logo ou un repère.

Selon un autre mode particulier de réalisation de l'invention, la modification apportée à la partie sélectionnée peut être un masquage ou une déformation rendant le contenu inintelligible et permettant de s'assurer qu'aucune donnée confidentielle ne sera diffusée.

Selon un autre mode particulier de réalisation de l'invention, la modification apportée à la partie sélectionnée peut être l'incrustation d'un contenu cliquable permettant à l'utilisateur l'affichage du contenu de référence en haute définition.

A la dernière étape (SND) le procédé va diffuser le contenu modifié à au moins un second terminal grâce au module COM du dispositif de modification d'un contenu multimédia.

Le procédé peut être déclenché à intervalle de temps régulier ou sur simple requête. Les requêtes pouvant être par exemple liées à une action utilisateur comme le clic sur ladite au moins une partie ou bien lorsque l'analyse du contenu multimédia indique que le contenu diffusé par ledit au moins un premier terminal a changé de manière importante. La fréquence de déclenchement dudit procédé permettra également, si elle est élevée, d'avoir une synchronisation entre le contenu de référence partagé et diffusé au niveau de l'écran de la salle de visioconférence et le contenu modifié par ledit procédé et diffusé audit au moins un second terminal.

L'invention est uniquement définie par les revendications annexées.

## Revendications

1. Procédé de modification d'un contenu multimédia capté par au moins un premier terminal apte à retransmettre ledit contenu sur un réseau de communication, **caractérisé en ce que** le procédé comprend :
- une étape d'identification (SEL) d'au moins une partie dudit contenu multimédia capté par ledit au moins un premier terminal, ladite au moins une partie dudit contenu multimédia contenant au moins une image,
- une étape de détermination (CALC) pour ladite au moins une partie dudit contenu multimédia d'au moins un indicateur de qualité, ledit indicateur de qualité étant déterminé par comparaison entre ladite au moins une partie dudit contenu multimédia et un contenu de référence ;
- une étape de modification (GEN) de ladite au moins une partie dudit contenu en fonction dudit au moins un indicateur de qualité.

2. Procédé selon la revendication 1 **caractérisé en ce que** l'étape de modification est suivie d'une étape de transmission, vers au moins un second terminal, du contenu multimédia modifié.

3. Procédé selon la revendication 1 **caractérisé en ce que** ledit au moins un indicateur de qualité dépend en outre des capacités matérielles ou logicielles dudit au moins un premier terminal.

4. Procédé selon la revendication 1 **caractérisé en ce que** ledit au moins un indicateur de qualité dépend en outre de la qualité du réseau de communication utilisé.

5. Procédé selon la revendication 1 **caractérisé en ce que** ledit au moins un indicateur de qualité du contenu de ladite au moins une partie est comparé à au moins une valeur de seuil prédéterminée de niveau de qualité.

6. Procédé selon la revendication 5 **caractérisé en ce que** ladite au moins une valeur de seuil est obtenue à partir d'une base de données.

7. Procédé selon la revendication 1 **caractérisé en ce que** le contenu de référence est obtenu à partir d'une base de données.

8. Procédé selon la revendication 1 **caractérisé en ce que** la modification de ladite au moins une partie est un enrichissement par une image ou une séquence d'images ayant ledit au moins un indicateur de qualité supérieur à celui déterminé pour ladite au moins une partie.

9. Procédé selon la revendication 1 **caractérisé en ce que** la modification de ladite au moins une partie est un enrichissement par une image ou une séquence d'images ayant ledit au moins un indicateur de qualité inférieur à celui déterminé pour ladite au moins une partie.

10. Dispositif de modification d'un contenu multimédia capté par un premier terminal apte à retransmettre ledit contenu, **caractérisé en ce que** le dispositif comprend :
- un module d'émission / réception (COM) de contenus multimédia,
- un module d'indentification (IA) d'au moins une partie dudit contenu multimédia capté par ledit au moins un premier terminal, ladite au moins une partie dudit contenu multimédia contenant au moins une image,
- un module de calcul (COMP) permettant la détermination pour ladite au moins une partie dudit contenu multimédia d'au moins un indicateur de qualité, ledit indicateur de qualité étant déterminé par comparaison entre ladite au moins une partie dudit contenu multimédia et un contenu de référence ;
- un module de traitement (VID) permettant la modification de ladite au moins une partie dudit contenu en fonction dudit au moins un indicateur de qualité.

11. Terminal ou serveur **caractérisé en ce qu'**il comporte un dispositif de modification selon la revendication 10.

12. Système de modification d'un contenu multimédia capté par un premier terminal apte à retransmettre ledit contenu, **caractérisé en ce que** le système comprend :
- un premier terminal pour capter un contenu multimédia ;
- un dispositif de réception pour recevoir le contenu multimédia ;
- un dispositif d'indentification d'au moins une partie dudit contenu multimédia, ladite au moins une partie dudit contenu multimédia contenant au moins une image ;
- un dispositif de calcul permettant la détermination pour ladite au moins une partie dudit contenu multimédia d'au moins un indicateur de qualité, ledit indicateur de qualité étant déterminé par comparaison entre ladite au moins une partie dudit contenu multimédia et un contenu de référence ;
- un dispositif de traitement permettant la modification de ladite au moins une partie dudit contenu en fonction dudit au moins un indicateur de qualité.
- un dispositif d'émission du contenu multimédia modifié
- un second terminal pour recevoir et restituer le contenu modifié

13. Programme d'ordinateur comportant des instructions pour la mise en oeuvre du procédé selon l'une quelconque des revendications 1 à 9, lorsque le programme est exécuté par un processeur.

## Patentansprüche

1. Verfahren zum Ändern eines Multimedia-Inhalts, der von mindestens einem Endgerät aufgenommen wird, das geeignet ist, den Inhalt über ein Kommunikationsnetz weiterzuübertragen, **dadurch gekennzeichnet, dass** es umfasst:
- einen Schritt des Identifizierens (SEL) mindestens eines Teils des Multimedia-Inhalts, der von dem mindestens einen Endgerät aufgenommen wird, wobei der mindestens eine Teil des Multimedia-Inhalts mindestens ein Bild enthält,
- einen Schritt des Bestimmens (CALC), für den mindestens einen Teil des Multimedia-Inhalts, mindestens eines Qualitätsindikators, wobei der Qualitätsindikator durch Vergleich zwischen dem mindestens einen Teil des Multimedia-Inhalts und einem Referenzinhalt bestimmt wird;
- einen Schritt des Änderns (GEN) des mindestens einen Teils des Inhalts in Abhängigkeit von dem mindestens einen Qualitätsindikator.

2. Verfahren nach Anspruch 1, **dadurch gekennzeichnet, dass** auf den Schritt des Änderns ein Schritt des Übertragens des geänderten Multimedia-Inhalts zu mindestens einem zweiten Endgerät folgt.

3. Verfahren nach Anspruch 1, **dadurch gekennzeichnet, dass** der mindestens eine Qualitätsindikator ferner von den Hardware- oder Softwarekapazitäten des mindestens einen ersten Endgeräts abhängt.

4. Verfahren nach Anspruch 1, **dadurch gekennzeichnet, dass** der mindestens eine Qualitätsindikator ferner von der Qualität des verwendeten Kommunikationsnetzes abhängt.

5. Verfahren nach Anspruch 1, **dadurch gekennzeichnet, dass** der mindestens eine Qualitätsindikator des Inhalts des mindestens einen Teils mit mindestens einem vorbestimmten Schwellenwert eines Qualitätsniveaus verglichen wird.

6. Verfahren nach Anspruch 5, **dadurch gekennzeichnet, dass** der mindestens eine Schwellenwert aus einer Datenbank erhalten wird.

7. Verfahren nach Anspruch 1, **dadurch gekennzeichnet, dass** der Referenzinhalt aus einer Datenbank erhalten wird.

8. Verfahren nach Anspruch 1, **dadurch gekennzeichnet, dass** das Ändern des mindestens einen Teils eine Anreichung um ein Bild oder eine Bildsequenz ist, das bzw. die den mindestens einen Qualitätsindikator hat, der größer als der für den mindestens einen Teil bestimmte ist.

9. Verfahren nach Anspruch 1, **dadurch gekennzeichnet, dass** das Ändern des mindestens einen Teils eine Anreichung um ein Bild oder eine Bildsequenz ist, das bzw. die den mindestens einen Qualitätsindikator hat, der kleiner als der für den mindestens einen Teil bestimmte ist.

10. Vorrichtung zum Ändern eines Multimedia-Inhalts, der von mindestens einem Endgerät aufgenommen wird, das geeignet ist, den Inhalt weiterzuübertragen, **dadurch gekennzeichnet, dass** die Vorrichtung umfasst:
- ein Modul zum Senden/Empfangen (COM) von Multimedia-Inhalten,
- ein Identifizierungsmodul (IA) zum Identifizieren mindestens eines Teils des Multimedia-Inhalts, der von dem mindestens einen Endgerät aufgenommen wird, wobei der mindestens eine Teil des Multimedia-Inhalts mindestens ein Bild enthält,
- ein Rechenmodul (COMP), welches das Bestimmen, für den mindestens einen Teil des Multimedia-Inhalts, mindestens eines Qualitätsindikators ermöglicht, wobei der Qualitätsindikator durch Vergleich zwischen dem mindestens einen Teil des Multimedia-Inhalts und einem Referenzinhalt bestimmt wird;
- ein Verarbeitungsmodul (VID), welches das Ändern des mindestens einen Teils des Inhalts in Abhängigkeit von dem mindestens einen Qualitätsindikator ermöglicht.

11. Endgerät oder Server, **dadurch gekennzeichnet, dass** es bzw. er eine Vorrichtung zum Ändern nach Anspruch 10 umfasst.

12. System zum Ändern eines Multimedia-Inhalts, der von mindestens einem Endgerät aufgenommen wird, das geeignet ist, den Inhalt weiterzuübertragen, **dadurch gekennzeichnet, dass** das System umfasst:
- ein erstes Endgerät zum Aufnehmen eines Multimedia-Inhalts;
- eine Empfangsvorrichtung zum Empfangen des Multimedia-Inhalts;
- eine Vorrichtung zum Identifizieren mindestens eines Teils des Multimedia-Inhalts, wobei der mindestens eine Teil des Multimedia-Inhalts mindestens ein Bild enthält;
- eine Rechenvorrichtung, die das Bestimmen, für den mindestens einen Teil des Multimedia-Inhalts, mindestens eines Qualitätsindikators ermöglicht, wobei der Qualitätsindikator durch Vergleich zwischen dem mindestens einen Teil des Multimedia-Inhalts und einem Referenzinhalt bestimmt wird;
- eine Verarbeitungsvorrichtung, die das Ändern des mindestens einen Teils des Inhalts in Abhängigkeit von dem mindestens einen Qualitätsindikator ermöglicht;
- eine Vorrichtung zum Senden des geänderten Multimedia-Inhalts;
- ein zweites Endgerät zum Empfangen und Wiedergeben des geänderten Inhalts.

13. Computerprogramm, das Anweisungen umfasst, die bei der Ausführung des Programms durch einen Prozessor das Verfahren nach einem der Ansprüche 1 bis 9 ausführen.

## Claims

1. Method for modifying an item of multimedia content captured by at least one first terminal able to retransmit said item of content over a communication network, **characterized in that** the method comprises:
- a step (SEL) of identifying at least one portion of said item of multimedia content captured by said at least one first terminal, said at least one portion of said item of multimedia content containing at least one image,
- a step (CALC) of determining at least one quality indicator for said at least one portion of said item of multimedia content, said quality indicator being determined by comparing said at least one portion of said item of multimedia content and an item of reference content;
- a step (GEN) of modifying said at least one portion of said item of content on the basis of said at least one quality indicator.

2. Method according to Claim 1, **characterized in that** the modification step is followed by a step of transmitting the modified item of multimedia content to at least one second terminal.

3. Method according to Claim 1, **characterized in that** said at least one quality indicator also depends on the hardware or software capabilities of said at least one first terminal.

4. Method according to Claim 1, **characterized in that** said at least one quality indicator also depends on the quality of the communication network that is used.

5. Method according to Claim 1, **characterized in that** said at least one quality indicator for the content of said at least one portion is compared with at least one predetermined threshold value for the quality level.

6. Method according to Claim 5, **characterized in that** said at least one threshold value is obtained from a database.

7. Method according to Claim 1, **characterized in that** the item of reference content is obtained from a database.

8. Method according to Claim 1, **characterized in that** the modification of said at least one portion is an enrichment with an image or a sequence of images having said at least one quality indicator higher than the one determined for said at least one portion.

9. Method according to Claim 1, **characterized in that** the modification of said at least one portion is an enrichment with an image or a sequence of images having said at least one quality indicator lower than the one determined for said at least one portion.

10. Device for modifying an item of multimedia content captured by a first terminal able to retransmit said item of content, **characterized in that** the device comprises:
- a module (COM) for transmitting/receiving multimedia content,
- a module (IA) for identifying at least one portion of said item of multimedia content captured by said at least one first terminal, said at least one portion of said item of multimedia content containing at least one image,
- a computing module (COMP) for determining at least one quality indicator for said at least one portion of said item of multimedia content, said quality indicator being determined by comparing said at least one portion of said item of multimedia content and an item of reference content;
- a processing module (VID) for modifying said at least one portion of said item of content on the basis of said at least one quality indicator.

11. Terminal or server, **characterized in that** it comprises a modification device according to Claim 10.

12. System for modifying an item of multimedia content captured by a first terminal able to retransmit said item of content, **characterized in that** the system comprises:
- a first terminal for capturing an item of multimedia content;
- a reception device for receiving the item of multimedia content;
- a device for identifying at least one portion of said item of multimedia content, said at least one portion of said item of multimedia content containing at least one image;
- a computing device for determining at least one quality indicator for said at least one portion of said item of multimedia content, said quality indicator being determined by comparing said at least one portion of said item of multimedia content and an item of reference content;
- a processing device for modifying said at least one portion of said item of content on the basis of said at least one quality indicator;
- a device for transmitting the modified item of multimedia content;
- a second terminal for receiving and rendering the modified item of content.

13. Computer program comprising instructions for implementing the method according to any one of Claims 1 to 9 when the program is executed by a processor.
